## Europäisches Patentamt

## European Patent Office

## Office européen des brevets

(19)

(11) Veröffentlichungsnummer: **0 098 468**
**B1**

(12)

# EUROPÄISCHE PATENTSCHRIFT

(45) Veröffentlichungstag der Patentschrift:
03.09.86

(51) Int. Cl.⁴: **B 23 K 31/00**

(21) Anmeldenummer: **83106136.1**

(22) Anmeldetag: **23.06.83**

(54) **Verfahren zum Schweissplattieren von senkrechten Wänden.**

(30) Priorität: **06.07.82 DE 3225125**

(43) Veröffentlichungstag der Anmeldung:
**18.01.84 Patentblatt 84/3**

(45) Bekanntmachung des Hinweises auf die Patenterteilung:
**03.09.86 Patentblatt 86/36**

(84) Benannte Vertragsstaaten:
**AT BE CH DE FR GB IT LI LU NL SE**

(56) Entgegenhaltungen:
**US-A-3 010 010**

(73) Patentinhaber: **MAN GUTEHOFFNUNGSHÜTTE GMBH, Bahnhofstrasse 66, D-4200 Oberhausen 11 (DE)**

(72) Erfinder: **Herrmann, Bodo, Hebeleckstrasse 143, D-4250 Bottrop (DE)**
Erfinder: **Bastel, Paul, Wesselkampstrasse 18, D-4200 Oberhausen 11 (DE)**
Erfinder: **Bas, Selahattin, Jägerstrasse 126, D-4200 Oberhausen 11 (DE)**

LIBER, STOCKHOLM 1986

EP 0 098 468 B1

## Beschreibung

Erfindung betrifft ein Verfahren zum Schweißplattieren von senkrechten Wänden, bei dem jede Plattierungslage aus übereinander angeordneten, sich gegenseitig teilweise überlappenden, horizontalen Schweißraupen gebildet wird, die mit dünnen Schweißdrähten aufgetragen werden, und das besonders an ruhenden Bauteilen, wie zum Beispiel bei Stutzeninnenplattierungen schwerer Behälterteile vorteilhaft eingesetzt werden kann.

Es sind bereits Plattierungsverfahren durch Schweißen bekannt, bei welchen die Aufbringung des Plattierungsmaterials durch Schweißen unter Schutzgas z. B. mit Wolfram-Elektroden und mit Zusatzdraht aus dem zu plattierenden Material erfolgt.

Bekannt ist beispielsweise eine unter Schutzgas mit vergleichsweise dünnen Draht-Abschmelzelektroden arbeitende, vollautomatische Vorrichtung zum Schweißplattieren von senkrechten Innenwänden an zylinderförmigen Körpern gemäß der US-PS 3,010,010.

Nachteilig ist bei diesem oder ähnlichen Schweißverfahren einerseits die vergleichsweise niedrige Abschmelzleistung und andererseits die gerätetechnisch anspruchsvolle Schweißeinrichtung, bzw. die hiermit verbundene Störanfälligkeit.

Um den Nachteil der vergleichsweise geringen Auftragsleistung auszugleichen, ist der bekannte Schweißautomat gemäß genannter US-PS mit wenigstens zwei, gegebenenfalls auch drei Schweißköpfen ausgestattet. Hierdurch wird jedoch der Nachteil des hohen gerätetechnischen Aufwandes und damit der Störanfälligkeit signifikant erhöht.

Es sind weiterhin Schweißverfahren mit umhüllten Elektroden bekannt, bei welchen die Elektrodenführung und damit der Lagenaufbau von Hand erfolgt.

Für diese Verfahren gilt als Nachteil ebenfalls die niedrige Abschmelzleistung, besonders aber die hohe Fehlerhäufigkeit insbesondere beim Schweißen der ersten, auf den Grundwerkstoff gelegten Plattierungslage. Dazu fallen noch die sehr hohen Kosten der manuellen Operation nachteilig ins Gewicht.

Der Erfindung liegt die Aufgabe zugrunde, das Schweißplattieren von senkrechten Wänden derart rationalisierend und zugleich qualitativ verbessernd weiterzubilden, daß damit ein produktiveres, fehlerfreies, mechanisiertes Verfahren mit dem Ergebnis von absolut korrosionsbeständigen, dichten Schichten erzielt wird. Insbesondere sollen Fehlstellen im Auftragsgut ausgeschlossen sein, und es sollen auch solche zylindrischen Hohlkörper mit wirtschaftlichem Einsatz innen plattiert werden können, die manuell nicht zugänglich sind und demzufolge eine maschinelle Schweißung erhalten müssen. Es handelt sich dabei z. B. um fest eingeschweißte Stutzen im konventionellen und/oder nuklearen Apparatebau, an Rohrleitungen und anderen Komponenten, wie sie unter anderem im Primärkreislauf von Kernkraftwerken eingesetzt werden.

Insbesondere in diesem Bereich der Technik soll das erfindungsgemäße Verfahren so zuverlässig arbeiten, daß das Risiko von Unterbrechungen des Schweißprozesses mit absoluter Sicherheit vermieden wird.

Das erfindungsgemäße Schweißverfahren soll aber auch erfolgreich bei anderen Werkstücken einsetzbar sein, bei welchen die Schweißung hochwertig sein muß. Die Plattierung kann also bei dem vorstehend genannten Einsatzfall im Kernkraftwerksbereich aus hochwertigen Chrom-Nickel-Stählen bestehen, es können für die Anwendung in anderen Bereichen aber auch Materialien anderer Legierungen wie Inconel, Titan und dergleichen zum Plattieren verwendet werden.

Diese Aufgabe wird erfindungsgemäß bei einem Verfahren der eingangs genannten Art, bei welchem jede Plattierungslage aus übereinander angeordneten, sich gegenseitig teilweise überlappenden horizontalen Schweißraupen gebildet wird dadurch gelöst, daß die Schweißraupen unter Schweißpulver durch Unterpulver-Lichtbogenschweißung aufgetragen werden, und daß als Schweißpulverhalterung durch am Werkstück angebrachte Mittel geführte, nur in Höhenrichtung nachstellbare Stützmittel verwendet werden, die keine Relativbewegung in Schweißrichtung gegenüber dem Werkstück während des Schweißens ausführen.

Mit großem Vorteil kann dabei beim Innenplattieren von senkrecht gestellten zylindrischen Stutzen als Stützmittel für das zugeführte Schweißpulver das im Innern des Stutzens befindliche, durch Schweißen bereits eingebrachte Schweißpulver selbst verwendet werden.

Der Vorteil dieser Schweißpulverhalterung besteht darin, daß sie nicht mit dem Schweißkopf mitläuft, also keine Relativbewegung zum Werkstück während des Schweißens ausführt und somit keine Störung des empfindlichen Schweißbades durch das Schweißpulver verursacht wird.

Das erfindungsgemäße Verfahren ermöglicht es, besonders hochwertige Plattierungen an senkrecht stehenden Werkstücken bei hohen Fertigungsgeschwindigkeiten und geringem Aufwand herzustellen und es kann daher von einer idealen Lösung der anstehenden Probleme durch die Erfindung gesprochen werden.

Im folgenden wird ein Ausführungsbeispiel der Erfindung anhand von Zeichnungen näher beschrieben. Es zeigen:

Figur 1 einen Vertikalschnitt durch einen innen zu plattierenden Stutzen und

Figur 2 einen Horizontalschnitt durch den Stutzen gemäß Figur 1.

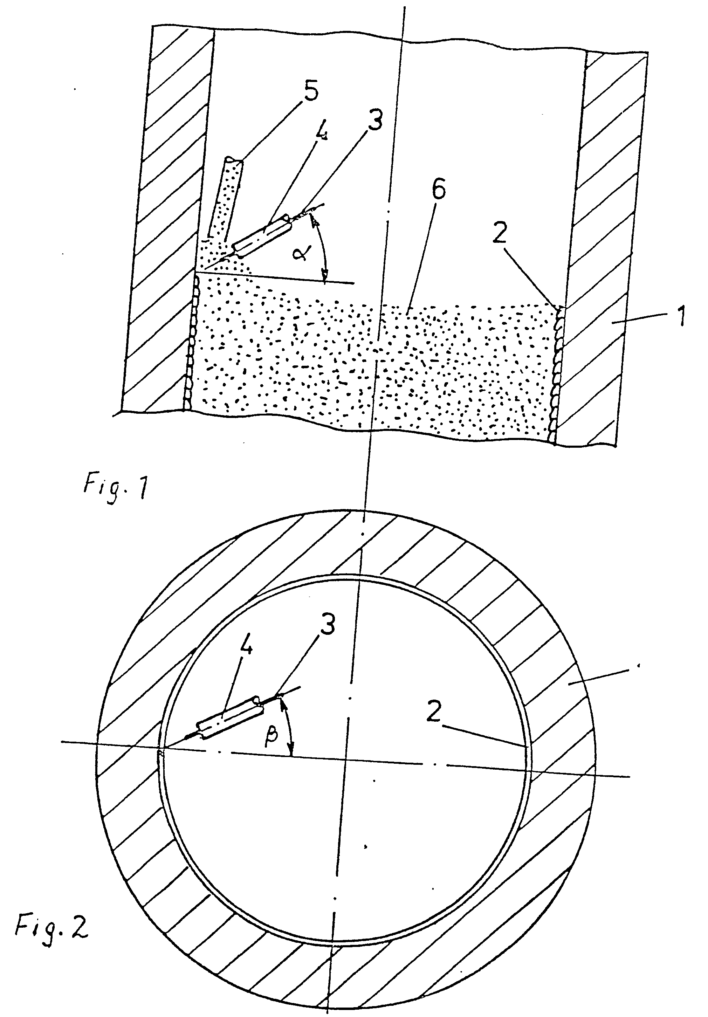

Gemäß Figur 1 bildet das innen zu plattierende Werkstück 1 einen senkrecht stehenden Stutzen, in welchem verbrauchtes Pulver 6 den Innenraum ausfüllt. Die Plattierung 2 besteht aus horizontal übereinanderliegenden, sich teilweise überlappenden Schweißraupen, die in mehreren Lagen übereinander aufgetragen werden können. Das Schweißpulver 6 wird durch einen Pulverzuführungskanal 5 zugeführt, welcher mit seiner Mündung dicht oberhalb des Schweißbereiches endet. Durch ihn wird soviel Schweißpulver 6 zugeführt, daß der Schweißbereich vollständig ausgefüllt ist.

Der Schweißdraht 3 wird durch eine Schweißdüse 4 zugeführt, die gegenüber der Horizontalen unter einem Winkel α und gegenüber dem Radius des Stutzens unter einem Winkel β angeordnet ist. Die Winkel α und β liegen in der Größenordnung von 0 bis 45° und werden empirisch ermittelt. Das bedeutet, daß in Schweißversuchen diese Winkel unter dem Gesichtspunkt bestimmt werden, eine qualitativ bestmögliche Plattierung zu erhalten. Die empirische Ermittlung ist notwendig, da diese Winkel je nach Plattierungsmaterial, Größe des Durchmessers von zu plattierenden zylindrischen Werkstücken und auch von der Art und der Dicke des zu plattierenden Materials abhängen. Besonders bei austenitischen Schweißplattierungen wird mit diesen Winkeln die günstigste Gefügeausbildung über Deltaferritbestimmungen gesteuert.

Sowohl die Schweißdüse 4 als auch die Pulverzuführung 5 werden von einem nicht gezeigten Gestell gehalten. Das Gestell dreht zum einen in Übereinstimmung sowohl die Schweißdüse 4 als auch die Pulverzuführung 5 und stellt weiterhin den Höhenversatz innerhalb einer Umdrehung ein, so daß eine gleichmäßige Überlappungsbreite übereinanderliegender Schweißraupen ermöglicht wird. Die Pulverstütze kann dementsprechend bei der Bearbeitung von Stutzen eine den Querschnitt ausfüllende Scheibe oder bei der Bearbeitung von Platten ein am Werkstück angebrachtes Band sein.

Besonders vorteilhaft ist es beim Innenplattieren von Stutzen, wenn gemäß Figur 1 so viel Pulver im Stutzen zurückgelassen wird, daß im Innenbereich die Stützung des neu zugeführten Pulvers von dem bereits eingebrachten Pulver vorgenommen wird. Das Pulver 6 bildet also selbst die Pulverstütze und eine gesonderte Vorrichtung kann entfallen. Da das auf dem mit Pulver gefüllten Innenvolumen aufgelegte Pulver sich besonders leicht bewegen läßt, wird bei dieser Ausführungsform eine Störung der Bewegung der Schweißdüse 4 bzw. des durch die Schweißdüse 4 zugeführten Schweißdrahtes 3 verhindert und für den Fachmann überraschend hat sich dadurch eine besonders hohe Qualität und Störungsfreiheit der Schweißplattierung ergeben. Nicht verbrauchtes Schweißpulver innerhalb der Pulverstütze, d.h. solches Pulver, welches nicht verschlackt wurde, kann nach vollständiger Plattierung des Werkstücks 1 wieder ausgesiebt und neu verwendet werden.

Die Ausbildung des genannten Gestells zur Führung der Pulverzuführung, der Schweißdüse und auch zur Zuführung des Schweißdrahtes 3 steht im Belieben des Konstrukteurs, kann mit bekannten Mitteln gelöst werden und auf eine entsprechende Beschreibung wird daher verzichtet.

**Patentansprüche**

1. Verfahren zur Schweißplattierung von senkrechten Wänden, bei dem jede Plattierungslage aus übereinander angeordneten, sich gegenseitig teilweise überlappenden, horizontalen Schweißraupen gebildet wird, die mit dünnen Schweißdrähten aufgetragen werden, dadurch gekennzeichnet, daß die Schweißraupen (2) unter Schweißpulver (6) durch Unterpulver-Lichtbogenschweißung aufgetragen werden, und daß als Schweißpulver-Halterung durch am Werkstück (1) angebrachte Mittel geführte, nur in Höhenrichtung nachstellbare Stützmittel verwendet werden, die keine Relativbewegung in Schweißrichtung gegenüber dem Werkstück (1) während des Schweißens ausführen.

2. Verfahren nach Anspruch 1, dadurch gekennzeichnet, daß beim Innenplattieren von senkrecht gestellten zylindrischen Stutzen, als Stützmittel für das zugeführte Schweißpulver (6) das im Innern des Stutzens (1) befindliche, durch Schweißen bereits eingebrachte Schweißpulver (6) selbst verwendet wird.

**Claims**

1. A process for the weld-deposited coating of vertical walls in which each coating layer is formed from horizontal welding beads arranged on top of each other and mutually partially overlapping which are applied with thin welding wires, characterised in that the welding beads (2) are applied by submerged arc welding under welding flux (6), and that support means which are adjustable only in height are used as welding flux support by means introduced on the work piece (1), which supports carry out no relative movement during welding in the direction of welding in relation to the work piece (1).

2. A process according to claim 1, characterised in that, in the internal coating of vertically positioned cylindrical supports, the welding flux (6) in the interior of the support (1), already introduced by welding, is itself used as support means for the supplied welding flux (6).

**Revendications**

1.- Procédé pour le placage par soudage de parois verticales, procédé dans lequel chaque couche de placage est constituée de passes de soudage horizontales, disposées les unes au-dessus des autres et se recouvrant réciproquement en partie, et qui sont rapportées avec des fils de soudage fins, procédé caractérisé en ce que les passes de soudage (2) sont rapportées sous flux de soudage pulvérulent (6) par soudage à l'arc sous flux pulvérulent, et que, pour fixer le flux pulvérulent, on utilise des moyens de support uniquement susceptibles d'être réglés en hauteur et passant par un moyen appliqué à la pièce d'oeuvre (1), ces moyens de support n'accomplissant pas de déplacement relatif dans la direction de soudage par rapport à la pièce d'oeuvre (1) pendant le soudage.

2.- Procédé selon la revendication 1, caractérisé en ce que, lors du placage interne de tubulures cylindriques placées verticalement, on utilise comme moyens de support pour le flux en poudre (6) qui est amené, le flux en poudre (6) lui-même déjà introduit au cours du soudage et se trouvant à l'intérieur de la tubulure (1).

Fig. 1

Fig. 2